(19) Europäisches Patentamt
European Patent Office
Office européen des brevets

(11) Numéro de publication : **0 547 934 A1**

# (12) DEMANDE DE BREVET EUROPEEN

(21) Numéro de dépôt : **92403250.1**

(22) Date de dépôt : **02.12.92**

(51) Int. Cl.[5] : **B01D 53/36,** B01J 23/22, B01J 23/28, B01J 23/30

(30) Priorité : **16.12.91 FR 9115581**

(43) Date de publication de la demande : **23.06.93 Bulletin 93/25**

(84) Etats contractants désignés : **AT BE CH DE DK ES FR GB GR IT LI LU NL SE**

(71) Demandeur : **RHONE-POULENC CHIMIE**
**25, quai Paul Doumer**
**F-92408 Courbevoie Cédex (FR)**

(72) Inventeur : **Garcin, Eric**
**59 bis, allée Emmanuel Gounot**
**F-69005 Lyon (FR)**
Inventeur : **Luck, Francis**
**11, Place du Caprice**
**F-93160 Noisy-Le-Grand (FR)**
Inventeur : **Surantyn, Raymond**
**21, avenue Jacques Duclos**
**F-95270 St Martin du Tertre (FR)**

(74) Mandataire : **Dubruc, Philippe et al**
**RHONE-POULENC CHIMIE Direction de la Propriété Industrielle 25, Quai Paul Doumer**
**F-92408 Courbevoie Cedex (FR)**

## (54) Catalyseur de réduction sélective des oxydes d'azote contenus dans un flux gazeux et application desdits catalyseurs.

(57) La présente invention a pour objet un nouveau catalyseur de réduction sélective des oxydes d'azote contenus dans un flux gazeux. Plus particulièrement, l'invention concerne un procédé de réduction catalytique, au moyen de l'ammoniac, des oxydes d'azote présents dans un flux gazeux, mettant en oeuvre ce catalyseur.

Le catalyseur de l'invention qui comprend un support d'au moins l'un des oxydes minéraux choisis parmi l'alumine, les aluminates, l'oxyde de titane et l'oxyde de zirconium et une phase catalytiquement active d'au moins l'un des oxydes métalliques choisis parmi les oxydes de vanadium et/ou de molybdène et/ou de tungstène est caractérisé par le fait qu'il présente un état de surface tel que le support est lié chimiquement aux éléments métalliques V et/ou Mo et/ou W et qu'il ne présente pas de phases cristallines de type $V_2O_5$ et/ou $MoO_3$ et/ou $WO_3$.

EP 0 547 934 A1

La présente invention a pour objet un nouveau catalyseur de réduction sélective des oxydes d'azote contenus dans un flux gazeux. Plus particulièrement, l'invention concerne un procédé de réduction catalytique, au moyen de l'ammoniac, des oxydes d'azote présents dans un flux gazeux, mettant en oeuvre ce catalyseur.

De nombreux effluents gazeux tels que notamment les gaz d'échappement des automobiles, les gaz résiduaires des chaudières et autres unités fixes de combustion, les gaz résiduaires de fabrication d'acide nitrique et les gaz résiduaires industriels en général, renferment une quantité plus ou moins importante d'oxydes d'azote qui peuvent être des oxyde nitreux NO ou nitrique $NO_2$. Il est usuel de dénommer lesdits oxydes sous l'appellation $NO_x$.

Les oxydes d'azote $NO_x$ émis dans l'atmosphère contribuent d'une manière non négligeable, à l'acidité des pluies et sont responsables avec les hydrocarbures de la pollution photooxydante très dommageable pour l'environnement.

Il importe donc d'éliminer les oxydes d'azote $NO_x$ contenus dans un flux gazeux avant tout rejet dans l'atmosphère.

A cet égard, les différentes législations nationales publiées exigent que les gaz résiduaires contiennent des valeurs notablement faibles en oxydes d'azote ($NO_x$) inférieures ou égales à environ 200 vpm (0,02 %).

C'est pourquoi de nombreux procédés ont été proposés pour réduire à des valeurs admissibles la teneur en $NO_x$ des flux gazeux résiduaires.

Ainsi, on a préconisé selon FR-A-2 450 784, un catalyseur permettant la réduction en azote des oxydes d'azote $NO_x$ contenus dans un flux gazeux, et ceci au moyen d'ammoniac.

Ce catalyseur est constitué d'un support d'alumine poreux et d'une phase catalytiquement active, à une teneur comprise entre 0,5 et 20 % en poids de catalyseur. Ledit catalyseur s'est révélé particulièrement efficace pour la réduction des oxydes d'azote résiduaires formés lors de la synthèse de l'acide nitrique par oxydation de l'ammoniac au moyen d'oxygène. Ce catalyseur présente également l'avantage de pouvoir être utilisé à des températures relativement basses, de l'ordre de 180°C à 250°C, d'où une économie d'énergie dans la mesure où les flux gazeux à traiter n'ont pas à être réchauffés. Cependant, il s'est avéré qu'un tel catalyseur présentait des insuffisances lorsqu'il était employé pour la réduction catalytique au moyen d'ammoniac, des oxydes d'azote contenus dans un flux gazeux maintenu à une température supérieure ou égale à 300°C.

Il a été constaté qu'à haute température, la réduction des oxydes d'azote $NO_x$, par l'ammoniac, en présence du catalyseur décrit dans FR-A-2 450 784, s'accompagne de la formation de protoxyde d'azote $N_2O$ dont la présence est aussi indésirable.

En effet, il a été suggéré récemment que le protoxyde d'azote est un gaz jouant un rôle important dans l'effet de serre et dans les mécanismes de déplétion de l'ozone stratosphérique.

La présence de protoxyde d'azote serait attribuée à des réactions secondaires d'oxydation de l'ammoniac selon des réactions du type :

$$2\,NH_3 + 2\,O_2 \rightarrow N_2O + 3\,H_2O \quad (1)$$

$$4\,NH_3 + 4\,NO + 3\,O_2 \rightarrow 4\,N_2O + 6\,H_2O \quad (2)$$

A haute température, il s'ensuit une pollution supplémentaire due au protoxyde d'azote et également une consommation supplémentaire d'ammoniac due à la réaction parasite (1).

Un but de la présente invention est de fournir un catalyseur qui permet à des températures supérieures ou égales à 300°C, avantageusement comprises entre 350°C et 450°C, la réduction sélective par l'ammoniac des oxydes d'azote contenus dans un flux gazeux c'est-à-dire qu'il conduit à la récupération d'un flux gazeux exempt d'oxydes d'azote.

Un autre but de l'invention est de fournir un catalyseur qui minimise la formation du protoxyde d'azote lors de la réduction sélective des oxydes d'azote à haute température.

Un autre but de la présente invention est de fournir un catalyseur qui empêche la surconsommation d'ammoniac par rapport à la stoechiométrie habituelle qui est de l'ordre d'une mole par mole de $NO_x$ réduite, lorsque la réduction des oxydes d'azote NOx est effectuée à haute température.

Il a maintenant été trouvé et ce qui constitue l'objet de la présente invention un catalyseur de réduction par l'ammoniac des oxydes d'azote présents dans un flux gazeux dans un procédé de réduction fonctionnant à une température supérieure ou égale à 300°C, ledit catalyseur comprenant un support d'au moins l'un des oxydes minéraux choisis parmi l'alumine, les aluminates, l'oxyde de titane et l'oxyde de zirconium et une phase catalytiquement active d'au moins l'un des oxydes métalliques choisis parmi les oxydes de vanadium et/ou de molybdène et/ou de tungstène caractérisé par le fait qu'il présente un état de surface tel que le support est lié chimiquement aux éléments métalliques V et/ou Mo et/ou W et qu'il ne présente pas de phases cristallines de type $V_2O_5$ et/ou $MoO_3$ et/ou $WO_3$.

Une des caractéristiques du catalyseur de l'invention est que l'élément métallique M (où M représente V et/ou Mo et/ou W) est lié au support sur lequel il est présent.

Sans vouloir être lié ou limité par une théorie particulière, on peut estimer que la liaison entre l'élément

métallique S du support (où S représente Al et/ou Ti et/ou Zr) et l'élément métallique M, est probablement du type S-O-M et que ces oxydes se trouvent exclusivement sous forme d'unités $MO_4$ de surface, de structure tétraédrique liées au support et d'oligomères d'unités $MO_4$ et/ou $MO_5$ liés au support et qu'ils ne comportent pas en surface des phases d'oxydes métalliques $V_2O_5$ et/ou $MoO_3$ et/ou $WO_3$ qui constituent des phases bien cristallisées.

Les catalyseurs de l'invention peuvent être caractérisés par spectroscopie Raman dans des conditions opératoires telles qu'il ne se produit pas de dégradation thermique des catalyseurs sous l'effet de la source excitatrice du spectromètre.

Dans ces conditions, ils possèdent un spectre avec présence de raies caractéristiques des vanadates, molybdates ou tungstates polymérisés ou non dans la zone de fréquence 850-980 $cm^{-1}$ et 220-370 $cm^{-1}$ et absence de raies caractéristiques des oxydes de vanadium cristallin à 1000, 700, 535 et 400 $cm^{-1}$, de molybdène cristallin à 1000, 815, 665 et 280 $cm^{-1}$, de tungstène cristallin à 810, 715 et 270 $cm^{-1}$.

La demanderesse a constaté que lorsque le catalyseur présentait les caractéristiques précitées qui se traduisent par un spectre Raman tel que défini, ce catalyseur présentait des performances catalytiques améliorées.

Un premier avantage résultant de la mise en oeuvre d'un tel catalyseur dans un procédé de réduction des oxydes d'azote contenus dans un flux gazeux par l'ammoniac est qu'il permet de réduire les oxydes d'azote en azote à haute température tout en minimisant la formation du protoxyde d'azote.

Un autre avantage obtenu par la mise en oeuvre du catalyseur de l'invention est qu'il permet de diminuer la consommation en ammoniac.

Conformément à la présente invention, le catalyseur de l'invention résulte d'une certaine répartition des oxydes métalliques constituant la phase catalytiquement active sur le support qui peut être l'alumine, les aluminates, l'oxyde de titane $TiO_2$ et/ou l'oxyde de zirconium $ZrO_2$ dénommé zircone.

Par "aluminates", on entend les aluminates des métaux de transition divalents ayant un faible rayon ionique, de préférence, inférieur ou égal à 0,08 nm.

Comme exemples d'aluminates convenant à l'invention, on peut citer les aluminates de zinc, de nickel, de cobalt, de magnésium et de cuivre.

Parmi les aluminates précités, l'aluminate de nickel est préféré.

Les catalyseurs préférés selon l'invention ont pour support, l'alumine ou les aluminates.

Dans le cadre de l'invention on préfère utiliser un support de catalyseur à base d'alumine ou d'aluminates dont le volume de pore de diamètre de plus de 1000 Å est supérieur à 25 $cm^3$/100g et est plus particulièrement compris entre 25 et 70 $cm^3$/100 g, dont le volume de pore de diamètre de plus de 300 Å est supérieur à 40 $cm^3$/100 g et est plus particulièrement compris entre 43 et 70 $cm^3$/100 g, le volume poreux total étant compris entre 80 et 120 $cm^3$/ 100 g.

La surface dudit support à base d'alumine étant préférentiellement d'au plus 160 $m^2$/g et plus généralement comprise entre 90 et 150 $m^2$/g.

L'alumine pouvant être utilisée présente habituellement les formes cristallines $\gamma$, $\theta$, $\delta$, et $\alpha$, les formes $\gamma$, $\theta$ et $\delta$ étant généralement prépondérantes et la forme a se trouvant alors à l'état de traces.

Lors de la mise en oeuvre d'un oxyde de titane, on fait appel de préférence à sa forme anatase.

La surface spécifique dudit support pouvant varier très largement entre 5 et 200 $m^2$/g, de préférence entre 10 et 100$m^2$/g : le volume poreux total étant compris entre 10 et 50 $cm^3$/100 g, de préférence entre 20 et 40 $cm^3$/100 g.

En ce qui concerne la zircone, elle présente une surface spécifique entre 5 et 200 $m^2$/g : le volume poreux total étant compris entre 10 et 70 $cm^3$/100 g, de préférence entre 20 et 50 $cm^3$/100 g.

Conformément à la présente invention, les oxydes métalliques de vanadium, de molybdène ou de tungstène ou leurs mélanges sont déposés sur le support dans une proportion définie de telle sorte que les phases cristallines de type $V_2O_5$ et/ou $MoO_3$ et/ou $WO_3$ ne soient pas formées ce qui correspond à une proportion limitée de l'élément métallique par rapport à la surface spécifique du support.

A titre d'exemples, on précisera que dans le cas de l'alumine ou d'un aluminate, l'obtention d'un catalyseur répondant à cette caractéristique et présentant donc le spectre Raman précédemment défini, correspond à un recouvrement du support d'alumine par moins de X atomes de vanadium et/ou Y atomes de molybdène et/ou tungstène par nanomètre carré de support, X et Y étant caractérisés par les relations suivantes :

- X inférieur ou égal à 9
- Y inférieur ou égal à 6
- X inférieur ou égal à (1 - Y/6) x 9
- Y inférieur ou égal à (1 - X/9) x 6

Le nombre d'atomes X et Y est exprimé par rapport à la surface spécifique du support après calcination. Ladite surface est déterminée par mesure de la surface spécifique du catalyseur "fini" rapportée à la teneur

en support du catalyseur .

La phase catalytiquement active selon la présente invention, peut être constituée par au moins un oxyde métallique tel que les oxydes de vanadium, de molybdène et/ou de tungstène.

La teneur en phase active du catalyseur peut être comprise entre 0,01 et 50 % en poids et, de préférence, entre 0,1 et 20 % en poids par rapport au poids total du catalyseur.

Un catalyseur particulièrement bien adapté à l'invention est constitué d'une phase catalytiquement active constituée d'oxyde de vanadium $V_2O_5$ ou d'un mélange comprenant d'une part un oxyde de vanadium $V_2O_5$ et d'autre part un oxyde de molybdène $MoO_3$ ou un oxyde de tungstène $WO_3$. Un rapport pondéral entre $V_2O_5$ et $MoO_3$ ou $WO_3$ compris entre 1 et 0,01 est préféré.

Les catalyseurs de l'invention peuvent être fabriqués en mettant en oeuvre les techniques classiques de préparation des catalyseurs.

Un procédé bien adapté à leur préparation est un procédé d'imprégnation du support à l'aide d'une solution aqueuse contenant les éléments métalliques V et/ou M et/ou W, puis dans une étape suivante, à soumettre le support revêtu de V et/ou M et/ou W à un traitement thermique.

Ce procédé consiste, dans une première étape, à imprégner le support en forme par exemple de billes, de granulés ou d'extrudés de forme quelconque, par une solution d'un composé de vanadium et/ou de molybdène et/ou de tungstène fournissant les oxydes métalliques par calcination.

Il est également possible de précipiter lesdits composés sur le support.

Le composé de vanadium de départ peut être un oxyde de vanadium, un complexe de vanadium tel que l'acétylacétonate de vanadium ou l'oxalate de vanadyle ou un sel tel que le métavanadate d'ammonium ou le sulfate de vanadyle.

Les composés de molybdène ou de tungstène de départ peuvent être des sels d'ammonium tels que le dimolybdate d'ammonium, l'heptamolybdate d'ammonium, le métatungstate d'ammonium ou le paratungstate d'ammonium.

Les solutions d'imprégnation sont généralement des solutions aqueuses pouvant contenir des sels de métaux précurseurs des oxydes de vanadium, de molybdène et/ou de tungstène.

Selon un mode préféré, on fait appel aux sels solubles dans l'eau.

On peut utiliser comme solution d'imprégnation contenant le composé de vanadium, une solution aqueuse obtenue en dissolvant du pentoxyde de vanadium dans une solution d'acide oxalique.

Pour ce qui est des composés de molybdène et/ou de tungstène, les sels d'ammonium sont préférés.

On prépare le catalyseur de la présente invention, par exemple, en mélangeant une solution aqueuse d'un composé de vanadium avec le support d'alumine ou d'aluminates, afin de l'imprégner, ledit composé de vanadium étant mis en oeuvre dans des proportions telles que le nombre d'atomes de vanadium par nanomètre carré de support est inférieur ou égal à 9.

Dans le cas où il y a également présence d'un composé de molybdène et/ou de tungstène, leurs proportions seront définies en tenant compte des équations ou inéquations données précédemment.

Selon une deuxième étape, on effectue un traitement thermique qui consiste à calciner le support imprégné. Toutefois, il est souhaitable mais non indispensable d'effectuer au préalable une étape de séchage.

Le séchage est conduit le plus souvent à l'air, à une température de l'ordre de 100°C à 150°C, pendant environ 1 à 12 heures.

Puis l'on procède à une opération de calcination conduite généralement sous air à des températures de l'ordre de 300 à 800°C et de préférence de l'ordre de 350 à 600°C, pendant environ 1 à 6 heures.

L'opération d'imprégnation peut être répétée une ou plusieurs fois, et être suivie à chaque fois de l'opération de calcination.

Il est également possible de préparer le catalyseur de l'invention selon un procédé de co-malaxage du support sous forme de poudre et des composés de vanadium et/ou de molybdène et/ou de tungstène sous forme d'oxydes et/ou de sels, en présence d'eau et éventuellement d'un acide, par exemple l'acide nitrique ou d'une base, par exemple l'ammoniaque.

La pâte obtenue subit une extrusion sous une forme quelconque, par exemple, extrudés cylindriques ou polylobés, anneaux, monolithes etc...

Les extrudés obtenus peuvent être éventuellement séchés et calcinés comme décrit précédemment.

Un autre objet de l'invention consiste en un procédé de réduction par l'ammoniac des oxydes d'azote présents dans un flux gazeux au moyen d'un catalyseur tel que décrit ci-dessus.

Pour son utilisation dans le procédé d'élimination des oxydes d'azote du flux gazeux les contenant, on charge en général ledit catalyseur dans un réacteur approprié sous forme d'un lit fixe ou d'un lit fluide.

D'une manière typique, le flux gazeux à épurer selon l'invention, est un flux gazeux résiduaire d'un procédé chimique ou d'une unité fixe de combustion et contenant entre autres espèces :

- de l'azote

- de l'oxygène à une teneur habituellement comprise entre 1 et 10 % en volume,
- des oxydes d'azote NOx à une teneur généralement comprise entre 0,01 et 1 % en volume,
- des oxydes de soufre $SO_x$ à une teneur habituellement comprise entre 0 et 1 % en volume,
- et de l'eau à une teneur généralement comprise entre 0,001 et 20 % en volume.

Le catalyseur, objet de la présente invention est parfaitement bien adapté pour être mis en oeuvre dans un procédé fonctionnant à une température supérieure ou égale à 300°C, de préférence comprise entre 300°C et 550°C. Avantageusement, la température du flux gazeux à traiter est comprise entre 350°C et 450°C.

La vitesse spatiale horaire (VVH) des gaz à traiter est fonction de la température du catalyseur, une température plus élevée permettant une VVH plus forte pour un résultat donné.

La VVH représente le volume de gaz à traiter par volume de catalyseur et par heure. Elle est définie à température normale (0°C) et à pression normale (1 bar).

Le plus souvent, dans les intervalles de températures précités, la VVH est comprise entre 2 000 et 150 000 $h^{-1}$, de préférence, entre 3 000 à 100 000 $h^{-1}$.

Le rapport molaire $NH_3/NO_x$ est fonction de l'épuisement recherché en $NO_x$ dans le flux gazeux et les rejets admissibles en ammoniac dans le flux traité, les deux paramètres étant liés.

Habituellement, la réduction sélective des $NO_x$ réalisée selon l'invention, exige un rapport molaire $NH_3/NO_x$ inférieur à 1,1 et de préférence compris entre 0,8 et 1 selon le taux de transformation recherché et la teneur en $NO_x$ du gaz à traiter.

La pression du flux gazeux à traiter est favorable à la transformation des $NO_x$ en $N_2$.

Elle peut être comprise entre 1 et 20 bar, de préférence entre 1 et 15 bar.

Un mode de réalisation préférentiel du procédé de réduction des oxydes d'azote présents dans un flux gazeux consiste à moduler la quantité d'élément métallique catalytique présente en surface sur le catalyseur en fonction de la température de fonctionnement du procédé.

En effet, il a été trouvé de manière inattendue que ladite quantité pouvait être d'autant plus faible que la température de réduction était plus élevée.

Ainsi, le catalyseur mis en oeuvre présentera un nombre d'atomes X de vanadium ou d'atomes Y de molybdène et/ou tungstène par nanomètre carré d'autant plus faible que la température du flux gazeux à traiter est plus élevée.

On va préciser davantage cette caractéristique dans le cadre d'un exemple de catalyseurs particulièrement intéressants à savoir les catalyseurs à base d'alumine ou d'aluminates revêtus d'oxyde de vanadium. Ces catalyseurs permettent au moyen de l'ammoniac une décomposition efficace des $NO_x$ exclusivement en azote et eau entre 300°C et 550°C, sans oxyder de façon notable l'ammoniac et sans former de protoxyde d'azote de façon significative.

On considère que le seuil acceptable correspond à une quantité de protoxyde d'azote formée au cours de la réaction, inférieure ou égale à 1 % de la quantité d'oxydes d'azote $NO_x$, à l'entrée du réacteur.

Ainsi, lors du traitement d'un flux gazeux ne contenant pas d'eau, sous une pression de 4 bar absolus pour une vitesse spatiale de 8 000 $h^{-1}$ et un rapport $NO_2/NO_x$ en entrée inférieur à 0,5, il a été trouvé que le nombre X d'atomes de vanadium par nanomètre carré d'alumine pouvait être diminué d'autant plus que la température était plus élevée.

Si la température est inférieure ou égale à 300°C, X est de préférence inférieur ou égal à 9.

Si la température est inférieure ou égale à 350°C, X est de préférence inférieur ou égal à 7.

Si la température est inférieure ou égale à 400°C, X est de préférence inférieur ou égal à 4,5.

Si la température est inférieure ou égale à 500°C, X est de préférence inférieur ou égal à 1.

Les différentes valeurs de X peuvent être modulées si les conditions sont différentes à savoir s'il y a présence d'eau dans le flux gazeux ou si la pression et le temps de contact sont différents.

Dans ces conditions, on précisera, par exemple, pour l'alumine et les aluminates, que le nombre X d'atomes de vanadium par nanomètre carré est inférieur ou égal à 9 et est inférieur ou égal à la valeur $X_o$, fonction de la température T en Kelvin, du temps de contact $t_c$ rapporté à des conditions de température et de pression normales (en seconde), de la pression P (en bar) et de la concentration molaire $C_{H20}$ en eau, la valeur $X_o$ étant définie par :

$$X_o = [-58,0 + 4,65 . 10^4 . 1/T] \, t_c^{1,58} . P^{0,26} [1 + 5,2 \, C_{H20}]^{0,40}$$

avec dans ladite équation :

$CH_{20}$ compris entre 0 et 0,3 mole d'eau par mole de gaz traité,

$t_c$ compris entre 0,1 et 1 seconde,

P compris entre 1 et 15 bar,

T compris entre 580 et 800 K.

Le catalyseur de l'invention s'applique particulièrement bien au traitement des courants gazeux résiduaires obtenus en rejet d'un procédé de fabrication d'acide nitrique par oxydation de l'ammoniac.

Il convient également bien pour le traitement de tout gaz résiduaire contenant des $NO_x$, notamment les gaz résiduaires des chaudières et tout autre unité fixe de combustion.

Les exemples qui suivent illustrent l'invention sans pour autant la limiter.

EXEMPLE 1

Préparation d'un catalyseur A (représentatif de l'invention)

On utilise pour la préparation d'un catalyseur A une alumine sous forme de billes de 3 mm de diamètre, dont :

- la surface spécifique est de 152 $m^2/g$
- le volume poreux total est de 100 $cm^3/100$ g
- le volume poreux des pores de diamètre supérieur à 1000 Å est de 27 $cm^3/100$ g
- le volume poreux des pores de diamètre supérieur à 300 Å est de 46 $cm^3/100$ g

On imprègne 100 g de ce support avec 100 ml d'une solution aqueuse d'oxalate de vanadyle, obtenue par dissolution de 17,6 g de pentoxyde de vanadium dans une solution d'acide oxalique mis en oeuvre en quantité stoechiométrique par rapport au pentoxyde de vanadium.

Après 30 mn de contact, on sèche le produit obtenu en étuve à 120°C pendant 4 h, avant de le calciner pendant 4 h à 450°C sous air.

Le catalyseur A ainsi préparé contient en poids rapporté au support 15 % de pentoxyde de vanadium, réparti de façon homogène à l'intérieur des billes d'alumine, soit 7,7 atomes de vanadium par nanomètre carré.

EXEMPLE 2

Préparation d'un catalyseur B (représentatif de l'invention)

On utilise pour la préparation d'un catalyseur B le support d'alumine décrit dans l'exemple 1.

On imprègne 100 g de ce support avec 100 ml d'une solution aqueuse d'oxalate de vanadyle, obtenue par dissolution de 13 g de pentoxyde de vanadium dans une solution d'acide oxalique.

Après 30 mn de contact, on sèche le produit obtenu en étuve à 120°C pendant 4 h, avant de le calciner pendant 4 h à 450°C sous air.

Le catalyseur B ainsi préparé contient en poids rapporté au support 11,5 % de pentoxyde de vanadium, réparti de façon homogène à l'intérieur des billes d'alumine, soit 5,6 atomes de vanadium par nanomètre carré.

EXEMPLE 3

Préparation d'un catalyseur C (représentatif de l'invention)

On utilise pour la préparation d'un catalyseur C le support d'alumine décrit dans l'exemple 1.

On imprègne 100 g de ce support avec 100 ml d'une solution aqueuse d'oxalate de vanadyle, obtenue par dissolution de 11,1 g de pentoxyde de vanadium dans une solution d'acide oxalique.

Après 30 mn de contact, on sèche le produit obtenu en étuve à 120°C pendant 4 h, avant de le calciner pendant 4 h à 450°C sous air.

Le catalyseur C ainsi préparé contient en poids rapporté au support 10 % de pentoxyde de vanadium, réparti de façon homogène à l'intérieur des billes d'alumine, soit 4,8 atomes de vanadium par nanomètre carré.

EXEMPLE 4

Préparation d'un catalyseur D (représentatif de l'invention)

On utilise pour la préparation d'un catalyseur D le support d'alumine décrit dans l'exemple 1.

On imprègne 100 g de ce support avec 100 ml d'une solution aqueuse d'oxalate de vanadyle, obtenue par dissolution de 4,2 g de pentoxyde de vanadium dans une solution d'acide oxalique.

Après 30 mn de contact, on sèche le produit obtenu en étuve à 120°C pendant 4 h, avant de le calciner pendant 4 h à 450°C sous air.

Le catalyseur D ainsi préparé contient en poids rapporté au support 4 % de pentoxyde de vanadium, réparti de façon homogène à l'intérieur des billes d'alumine, soit 1,8 atomes de vanadium par nanomètre carré.

EXEMPLE 5

Préparation d'un catalyseur E* (essai comparatif)

On utilise pour la préparation d'un catalyseur E* le support d'alumine décrit dans l'exemple 1.

On imprègne 100 g de ce support avec 100 ml d'une solution aqueuse d'oxalate de vanadyle, obtenue par dissolution de 17,6 g de pentoxyde de vanadium dans une solution d'acide oxalique.

Après 30 mn de contact, on sèche le produit obtenu en étuve à 120°C pendant 4 h, avant de le calciner pendant 4 h à 450°C sous air.

On imprègne 100 g de ce produit avec 100 ml d'une solution aqueuse d'oxalate de vanadyle, obtenue par dissolution de 11,6 g de pentoxyde de vanadium dans une solution d'acide oxalique.

Après 30 mn de contact, on sèche le produit obtenu en étuve à 120°C pendant 4 h, avant de le calciner pendant 4 h à 450°C sous air.

Le catalyseur E* ainsi préparé contient en poids rapporté au support 25 % de pentoxyde de vanadium, réparti de façon homogène à l'intérieur des billes d'alumine, soit 13,9 atomes de vanadium par nanomètre carré.

EXEMPLE 6

Préparation d'un catalyseur F* (essai comparatif)

On utilise pour la préparation d'un catalyseur F* du dioxyde de titane sous la forme d'extrudés trilobés de 3 mm de diamètre, dont :

- la surface spécifique est de 155 $m^2/g$
- le volume poreux total est de 30 $cm^3/100$ g
- le volume poreux des pores de diamètre supérieur à 1000 Å est de 6 $cm^3/100$ g
- le volume poreux des pores de diamètre supérieur à 300 Å est de 17 $cm^3/100$ g

On imprègne 100 g de ce support avec 30 ml d'une solution aqueuse d'oxalate de vanadyle, obtenue par dissolution de 4,4 g de pentoxyde de vanadium dans une solution d'acide oxalique.

Après 30 mn de contact, on sèche le produit obtenu en étuve à 120°C pendant 4 h, avant de le calciner pendant 4 h à 450°C sous air.

On imprègne le produit obtenu avec 30 ml d'une solution aqueuse d'oxalate de vanadyle, obtenue par dissolution de 4,4 g de pentoxyde de vanadium dans une solution d'acide oxalique.

Après 30 mn de contact, on sèche le produit obtenu en étuve à 120°C pendant 4 h, avant de le calciner pendant 4 h à 450°C sous air.

Le produit ainsi obtenu est imprégné avec 30 ml d'une solution aqueuse d'oxalate de vanadyle, obtenue par dissolution de 4,4 g de pentoxyde de vanadium dans une solution d'acide oxalique.

Après 30 mn de contact, on sèche le produit obtenu en étuve à 120°C pendant 4 h, avant de le calciner pendant 4 h à 450°C sous air.

Le produit ainsi obtenu est imprégné avec 30 ml d'une solution aqueuse d'oxalate de vanadyle, obtenue par dissolution de 4,4 g de pentoxyde de vanadium dans une solution d'acide oxalique.

Après 30 mn de contact, on sèche le produit obtenu en étuve à 120°C pendant 4 h, avant de le calciner pendant 4 h à 450°C sous air.

Le catalyseur F* ainsi préparé a une surface spécifique de 70 $m^2/g$ et contient en poids rapporté au support 15 % de pentoxyde de vanadium, réparti de façon homogène à l'intérieur des extrudés de dioxyde de titane, soit 17 atomes de vanadium par nanomètre carré.

EXEMPLE 7

Préparation d'un catalyseur G (représentatif de l'invention)

On utilise pour la préparation d'un catalyseur G le support de dioxyde de titane décrit dans l'exemple 6.

On imprègne 100 g de ce support avec 30 ml d'une solution aqueuse d'oxalate de vanadyle, obtenue par dissolution de 4,2 g de pentoxyde de vanadium dans une solution d'acide oxalique.

Après 30 mn de contact, on sèche le produit obtenu en étuve à 120°C pendant 4 h, avant de le calciner pendant 4 h à 450°C sous air.

Le catalyseur G ainsi préparé a une surface spécifique de 88 $m^2/g$ et contient en poids rapporté au support 4 % de pentoxyde de vanadium, réparti de façon homogène à l'intérieur des extrudés de dioxyde de titane,

soit 3,1 atomes de vanadium par nanomètre carré.

EXEMPLE 8

Caractérisation des catalyseurs

Les catalyseurs A, B, C, D, E∗, G et F∗ préparés selon les exemples précédents sont caractérisés par spectroscopie RAMAN.

Les spectres RAMAN desdits catalyseurs ont été enregistrés à l'aide d'un appareil RAMONOR HG2S dans les conditions suivantes :

- longueur d'onde d'excitation : 514,5 nm
- puissance du laser : 300 mW
- Intervalle spectral : 800,0 à 1200,0 $cm^{-1}$
- largeur de fente : 400 μm
- largeur de fente spectrale : 3,49 $cm^{-1}$
- vitesse de balayage : 130 $cm^{-1}$/mn
- constante de temps : 6
- nombre de balayages : 3

On note sur le spectre des catalyseurs E∗ et F∗ préparés à titre comparatif, la présence de raies caractéristiques des oxydes de vanadium microcristallins à 1000, 700, 535 et 400 $cm^{-1}$. Ces raies sont absentes sur les catalyseurs A à D et G représentatifs de l'invention.

EXEMPLE 9

Evaluation des catalyseurs A, B, C, D, E∗ et G∗

Les catalyseurs dont les préparations sont décrites dans les exemples précédents sont testés pour déterminer l'efficacité de l'élimination des NOx et la formation de $N_2O$, dans un montage comportant des sources régulées en pression et en débit de NO, $NO_2$, $NH_3$, $H_2O$ et $N_2$. Le flux gazeux résultant des mélanges de gaz alimente un réacteur contenant un volume de 25 $cm^3$ de catalyseur et placé dans une enceinte thermostatée, puis passe dans un appareil de mesure des NOx par chimiluminescence et de mesure de $N_2O$ par chromatographie en phase gazeuse. On mesure l'efficacité d'élimination des NOx par l'équation suivante :

$$\text{Taux d'élimination des NOx (\%)} = \frac{\text{NOx entrée} - \text{NOx sortie}}{\text{NOx entrée}} \times 100$$

dans laquelle :

NOx entrée = concentration de NOx à l'entrée du réacteur

NOx sortie = concentration de NOx en sortie du réacteur

Les résultats obtenus sont indiqués dans le tableau I, en utilisant un mélange de gaz contenant :

- 0,2 % en volume de NOx
- Quantité de $NH_3$ variable (0,195 - 0,600 % en volume), ajustée afin d'obtenir une concentration en $NH_3$ en sortie inférieure à $10^{-4}$ % en volume
- 3 % en volume de $O_2$
- Complément $N_2$

avec une vitesse spatiale horaire de 8000 $h^{-1}$, la pression des gaz à traiter étant de 4 bar absolus.

Le tableau II présente la quantité d'ammoniac introduite à 420°C, et le tableau III présente la quantité de $N_2O$ formée à 370 et 420°C par les catalyseurs A, B, C, D, E∗, F∗ et G.

Tableau I

| Temp. des gaz (°C) | Taux de réduction des NOx (%) sur les catalyseurs | | | | | | |
|---|---|---|---|---|---|---|---|
| | A | B | C | D | E* | F* | G |
| 250 | 99 | 99 | 99 | 70 | 98 | 98 | 85 |
| 300 | 100 | 100 | 100 | 85 | 99 | 100 | 92 |
| 370 | 100 | 100 | 100 | 95 | 100 | 100 | 98 |
| 400 | 100 | 100 | 100 | 98 | 100 | 95 | 100 |
| 420 | 100 | 100 | 100 | 100 | 100 | 90 | 100 |

Tableau II

| Temp. des gaz (°C) | $NH_3$ injecté (%) sur les catalyseurs | | | | | | |
|---|---|---|---|---|---|---|---|
| | A | B | C | D | E* | F* | G |
| 420 | 0,320 | 0,230 | 0,205 | 0,195 | 0,465 | 0,600 | 0,250 |

Tableau III

| Temp. des gaz (°C) | $N_2O$ formé sur les catalyseurs (% x $10^{-4}$) | | | | | | |
|---|---|---|---|---|---|---|---|
| | A | B | C | D | E* | F* | G |
| 370 | 50 | 30 | 20 | 0 | 100 | 400 | 15 |
| 420 | 160 | 110 | 90 | 40 | 250 | 1500 | 80 |

Les résultats du tableau I montrent que les catalyseurs conformes à l'invention possèdent des performances d'élimination des NOx tout aussi bonnes que celles des catalyseurs préparés à titre comparatif.

Les résultats du tableau II montrent que les catalyseurs conformes à l'invention consomment beaucoup moins d'ammoniac que les catalyseurs préparés à titre comparatif.

Les résultats du tableau III montrent que les catalyseurs conformes à l'invention forment beaucoup moins de $N_2O$ que les catalyseurs préparés à titre comparatif.

## Revendications

**1 -** Catalyseur de réduction par l'ammoniac des oxydes d'azote présents dans un flux gazeux dans un procédé de réduction fonctionnant à une température supérieure ou égale à 300°C, ledit catalyseur comprenant un support d'au moins l'un des oxydes minéraux choisis parmi l'alumine, les aluminates, l'oxyde de titane et l'oxyde de zirconium et une phase catalytiquement active d'au moins l'un des oxydes métalliques choisis parmi les oxydes de vanadium et/ou de molybdène et/ou de tungstène caractérisé par le fait qu'il présente un état de surface tel que le support est lié chimiquement aux éléments métalliques V et/ou Mo et/ou W et qu'il ne présente pas de phases cristallines de type $V_2O_5$ et/ou $MoO_3$ et/ou $WO_3$.

**2 -** Catalyseur selon la revendication 1 caractérisé par le fait qu'il possède un spectre Raman avec présence de raies caractéristiques des vanadates, molybdates ou tungstates polymérisés ou non dans la zone de fréquence 850-980 $cm^{-1}$ et 220-370 $cm^{-1}$ et absence de raies caractéristiques des oxydes de vanadium cristallin à 1000, 700, 535 et 400 $cm^{-1}$, de molybdène cristallin à 1000, 815, 665 et 280 $cm^{-1}$, de tungstène cristallin à 810, 715 et 270 $cm^{-1}$.

**3 -** Catalyseur selon l'une des revendications 1 ou 2 caractérisé par le fait qu'il ne présente à la surface du support que des groupements vanadates, molybdates et/ou tungstates polymérisés ou non.

**4 -** Catalyseur selon l'une des revendications 1 à 3 caractérisé par le fait qu'il comprend un support alumine ou aluminate et que l'élément métallique M ( M = V et/ou Mo et/ou W) est lié au support selon une liaison du

type Al-O-M.

**5 -** Catalyseur selon l'une des revendications 1 à 4 caractérisé par le fait qu'il comprend un support alumine ou aluminate recouvert par moins de X atomes de vanadium et/ou Y atomes de molybdène et/ou tungstène par nanomètre carré de support, X et Y étant caractérisés par les relations suivantes :

- X inférieur ou égal à 9
- Y inférieur ou égal à 6
- X inférieur ou égal à (1 - Y/6) x 9
- Y inférieur ou égal à (1 - X/9) x 6

**6 -** Catalyseur selon l'une des revendications 1 à 5 caractérisé par le fait que la teneur en phase catalytiquement active est comprise entre 0,01 et 50 %, de préférence, entre 0,1 et 20 % en poids par rapport au poids total du catalyseur.

**7 -** Catalyseur selon l'une des revendications 1 à 6 caractérisé par le fait que la phase catalytiquement active est constituée d'oxyde de vanadium $V_2O_5$ ou d'un mélange comprenant d'une part un oxyde de vanadium $V_2O_5$ et d'autre part un oxyde de molybdène $MoO_3$ ou un oxyde de tungstène $WO_3$ avec un rapport pondéral entre $V_2O_5$ et $MoO_3$ ou $WO_3$ compris entre 1 et 0,01.

**8 -** Procédé de préparation d'un catalyseur selon l'une des revendications 1 à 7 caractérisé par le fait qu'il consiste :

- à imprégner le support avec une solution d'au moins un composé précurseur des oxydes de vanadium, de tungstène, de molybdène mis en oeuvre dans les proportions adéquates,
- à soumettre le support revêtu à un traitement thermique.

**9 -** Procédé de réduction par l'ammoniac des oxydes d'azote présents dans un flux gazeux maintenu à une température supérieure ou égale à 300°C, caractérisé par le fait que l'on traite ledit flux gazeux avec un catalyseur selon l'une des revendications 1 à 7.

**10 -** Procédé selon la revendication 9 caractérisé par le fait que la température du flux gazeux est comprise entre 300°C et 550°C, de préférence entre 350°C et 450°C.

**11 -** Procédé selon l'une des revendications 9 et 10 caractérisé par le fait en ce que le rapport moléculaire $NH_3/NO_x$ est inférieur à 1,1 et de préférence compris entre 0,8 et 1.

**12 -** Procédé selon l'une des revendications 9 à 11 caractérisé par le fait que la pression du flux gazeux est comprise entre 1 et 20 bar, de préférence entre 1 et 15 bar.

**13 -** Procédé selon l'une des revendications 9 à 12 caractérisé par le fait que la VVH est comprise entre 2000 et 150 000 $h^{-1}$, de préférence, entre 3 000 à 100 000 $h^{-1}$.

**14 -** Procédé selon l'une des revendications 9 à 13 caractérisé par le fait que le catalyseur mis en oeuvre présente un nombre d'atomes X de vanadium ou d'atomes Y de molybdène et/ou tungstène par nanomètre carré d'autant plus faible que la température du flux gazeux à traiter est plus élevée.

**15 -** Procédé selon l'une des revendications 9 à 14 caractérisé par le fait que pour l'alumine et les aluminates, le nombre X d'atomes de vanadium par nanomètre carré est inférieur ou égal à 9 et inférieur ou égal à la valeur $X_o$, fonction de la température T en Kelvin, du temps de contact $t_c$ rapporté à des conditions de température et de pression normales (en seconde), de la pression P (en bar) et de la concentration molaire $C_{H20}$ en eau, la valeur $X_o$ étant définie par :

$$X_o = [-58,0 + 4,65 . 10^4 . 1/T]\ t_c^{1,58} . P^{0,26} [1 + 5,2\ C_{H20}]^{0,40}$$

avec dans ladite équation :

$C_{H20}$ compris entre 0 et 0,3 mole d'eau par mole de gaz traité,
$t_c$ compris entre 0,1 et 1 seconde,
P compris entre 1 et 15 bar,
T compris entre 580 et 800 K.

Office européen des brevets

# RAPPORT DE RECHERCHE EUROPEENNE

Numero de la demande

EP 92 40 3250

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 348 768 (BASF AG)<br>* page 3, ligne 31 - page 4, ligne 16; revendications 1-3 * | 1,5, 7-11,13 | B01D53/36<br>B01J23/22<br>B01J23/28<br>B01J23/30 |
| A | EP-A-0 204 064 (SÜD-CHEMIE AG)<br>* page 4, dernier alinéa - page 5, alinéa 2 *<br>* page 8, alinéa 2 *<br>* page 9, dernier alinéa - page 10, alinéa 2 * | 1,4,5,7, 10-13 | |
| A | WO-A-8 903 366 (JOHNSON MATTHEY INC.)<br>* page 5, ligne 7 - page 8, ligne 17; revendications 1,3,7,8,13 * | 1,4, 7-11,13 | |

DOMAINES TECHNIQUES RECHERCHES (Int. Cl.5 )

B01D
B01J

Le présent rapport a été établi pour toutes les revendications

| Lieu de la recherche | Date d'achèvement de la recherche | Examinateur |
|---|---|---|
| LA HAYE | 17 MARS 1993 | CUBAS ALCARAZ J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)